# EUROPEAN PATENT APPLICATION

(11) **EP 2 065 009 A2**
(43) Date of publication of application: **03.06.2009**
(21) Application number: 08170196.3
(22) Date of filing: 28.11.2008
(51) Int. Cl.: A61C 3/02, A61C 8/00

(54) **Reamer for operating implant**

(30) Priority: 30.11.2007 KR 20070123524
(71) Applicant: Kim, Young Gi, Seoul (KR)
(72) Inventor: Kim, Young Gi, Seoul (KR)
(74) Representative: UEXKÜLL & STOLBERG

(57) **Abstract**

Provided is a reamer for operating an implant. The reamer includes a cutting blade for cutting a bone in order to place the implant in the bone, and a screw portion formed in a left-hand screw such that the cutting blade pushes upward bone remnants generated after the bone is cut or a transplanted bone transplanted in advance to a maxillary sinus mucous membrane while the reamer for operating the implant rotates counterclockwise.

## Description

### PRIORITY

This application claims priority under 35 U.S.C. § 119 to an application filed in the Korean Intellectual Property Office on November 30, 2007 and assigned Serial No. 10-2007-0123524, the contents of which are incorporated herein by reference.

### BACKGROUND OF THE INVENTION

### 1. Field of the Invention

Generally, "implant" means a replacement recovering a human tissue when the human tissue is lost, but in dental surgery, it means implanting an artificial tooth. In an implant, an artificial root of a tooth made of titanium having no rejection symptom against a human body is implant in and adhered to an alveolar bone so that it may replace a root of a lost tooth, and then an artificial tooth is fixed in order to recover the original function of a tooth.

### 2. Description of the Related Art

In case of a general prosthesis or false teeth, neighboring teeth and bones are damaged as time elapses due to the presence of the prosthesis or false teeth, but the implant has an advantage that neighboring tooth is not damaged. Also, since the implant has the same function and shape as those of a natural tooth and does not cause tooth-decay, the implant is likely to be used semi-permanently.

It has been reported that when the implant operation is performed, a success rate of an implant in a maxillary posterior teeth is lower compared with other portions. This is because bone quality is poor in the maxillary posterior teeth and a maxillary sinus (empty space located in the upper portion of the maxillary posterior teeth and surrounded by a mucous membrane causing an empyema) is there, and therefore, it is difficult to bury a long implant fixture.

When tooth extraction has been performed due to an old age or a disease in a teethridge, the maxillary sinus extends and expands together with bone absorption, so that this portion is short of a bone.

In the case where an amount of a bone is not sufficient due to low location of a maxillary sinus of a maxillary posterior teeth, a sinus graft of securing a sufficient amount of a bone through bone transplant for performing a long implant is used.

The sinus graft is classified into a method of a side approach sinus graft drilling a hole in the lateral side and an osteotome sinus graft.

The side approach sinus graft is an operation method of removing a maxillary sidewall depending on the height of a remaining alveolar bone reaching a maxillary sinus when performing an implant operation in a maxillary posterior teeth that is very short of a vertical amount of a bone (a length of remaining amount of a bone is less than 5 mm), and securing a sufficient amount of a bone through a transplanted bone to perform a long implant operation.

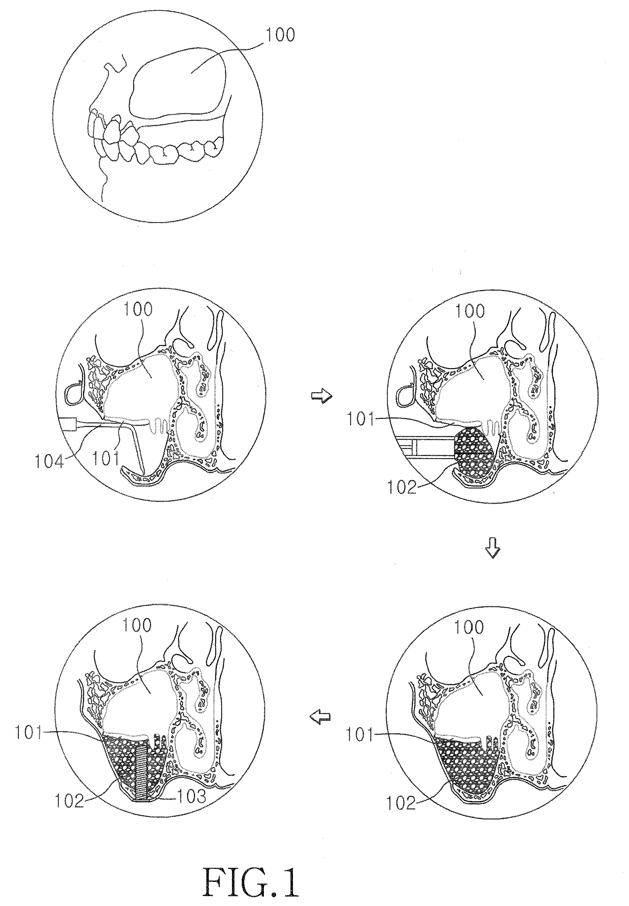

First, as illustrated in FIG. 1, the side approach sinus graft removes a maxillary sidewall 101 depending on the height of a remaining alveolar bone reaching a maxillary sinus 100 when performing an implant operation in a maxillary posterior teeth that is very short of a vertical amount of a bone (a remaining amount of a bone is less than 5 mm), and securing a sufficient amount of a bone through a transplanted bone 102 to perform a long implant operation.

An operation method of the side approach sinus graft includes processes of gathering bone pieces to be transplanted, setting a cutting line at a section vestibule portion corresponding to a molar tooth, forming a musculocutaneous flap, inserting a fracture line using a round bar 104 and opening a window of a facial wall when opening the maxillary sinus, lifting a maxillary facial wall and a maxillary mucous membrane, processing a space inside the maxillary sinus where a bone plate has been lifted, transplanting the gathered bone pieces, a suturing, and placing an implant in 6~12 months after the operation.

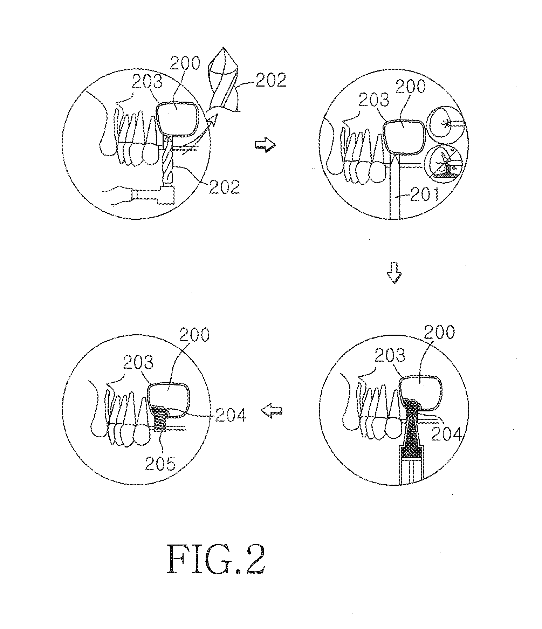

The osteotome sinus graft is an operation method used in the case where a remaining amount of a bone is not sufficient. As illustrated in FIG. 2, a bone is lifted by performing hammering using a tool such as an osteotome, an autogenous bone or an artificial bone is then inserted in a space formed by the lifting, and an implant is buried.

Referring to FIG. 2, a bone is deleted using a primary drill 202 to form a hole, osteotomes having a gradually increasing diameter from a small diameter to a large diameter are inserted into the hole by turns, hammering is carefully performed to gradually expand the hole, and the osteotome then gradually arrives up to the maxillary sinus mucous membrane 203, so that the maxillary sinus mucous membrane 203 is not damaged and only the bone is destroyed and cut. After that, an autogenous bone or an artificial bone 204 is transplanted in a space formed by the above processes, and an implant operation 205 is then performed.

The operation method of the osteotome sinus graft includes processes of: forming a hole up to a stable distance that does not touch a maxillary sinus mucous membrane, that is, up to a compact bone below the maxillary sinus mucous membrane using a twist drill; inserting osteotomes having a gradually increasing diameter into the hole and performing hammering until a hole corresponding to the diameter of an implant is formed; when the hole suitable for placing the implant is formed, finally hitting the osteotome carefully to destroy and cut the compact bone; filling the hole formed in the compact bone with a bone transplant material; inserting again the osteotome into the hole filled with the bone transplant material and smoothly hitting the osteotome to lift the maxillary sinus mucous membrane; and when the height of an available bone where the implant may be placed is secured, placing the implant.

The twist drill used for the osteotome sinus graft includes a plurality of very sharp and keen blades and a pointed cone-shaped upper end, and so provides an excellent forward cutting performance of a bone, but it is difficult for not only inexperienced dentist but also skilled dentist having many operation experiences to form a hole for placing an implant in a compact bone using the twist drill for implant operation without damaging the maxillary sinus mucous membrane.

That is, since the existing twist drill has a sharp cone-shaped upper end, when the upper end of the twist drill rotates and contacts the maxillary sinus mucous membrane, a point contact is made and so vertical force is concentrated on a point contact portion of the maxillary sinus mucous membrane that contacts the upper end of the twist drill. Accordingly, the maxillary sinus mucous membrane is easily ruptured, which makes it difficult to maintain and secure a bone transplant material for forming a bone material, and so the implant is not located inside the bone but remains exposed inside the maxillary sinus. Therefore, possibility of infection increases. Also, since an amount of a supporting bone is small, a supporting ability of the implant reduces.
Therefore, there is a need for an improved reamer for solving the above difficulties.

### SUMMARY OF THE INVENTION

An object of the present invention is to provide a reamer for operating an implant configured to perform bone transplant between a maxillary sinus mucous membrane and a bone more easily and safely without a danger of damaging the maxillary sinus mucous membrane in a structural aspect.

According to an aspect of the present invention, a reamer for operating an implant includes: a cutting portion for forming a hole for placing the implant in a bone; and a connection portion having a smaller diameter than that of the cutting portion and extending below the cutting portion, wherein the cutting portion includes: a cutting blade protruding an upper one side of the cutting portion including a circumference of a circumferential surface such that the upper one side makes a downward angle in a direction of a rotational axis of the reamer from the circumference, and including a cutting edge including one protruding vertex rising upward in a spiral shape with respect to the rotational axis of the reamer to perform a bone cutting; a discharge path serving as an empty space formed by arranging two or more cutting blades on the rotational axis of the reamer at an equal angle, and discharging bone remnants generated after the cutting by the cutting edge; and a screw portion connected with the discharge path, and the cutting portion allows the bone remnants generated during forward/reverse rotation of the reamer to be pushed upward along the screw portion or discharged downward by forming the cutting blade, the discharge path, and the screw portion on the circumference of the circumferential surface.

According to another aspect of the present invention, a reamer for operating an implant includes: a cutting portion for forming a hole for placing the implant in a bone; and a connection portion having a smaller diameter than that of the cutting portion and extending below the cutting portion, wherein the cutting portion includes: a cutting blade protruding an upper one side of the cutting portion including a circumference of a circumferential surface such that the upper one side makes a downward angle in a direction of a rotational axis of the reamer from the circumference, and including a cutting edge including one protruding vertex rising upward in a spiral shape with respect to the rotational axis of the reamer to perform a bone cutting; and a screw portion including a discharge path arranging two or more cutting blades on the rotational axis of the reamer at an equal angle and extending, on the circumference of the circumferential surface, from the two or more cutting blades to a lower portion of the cutting portion to allow bone remnants generated during forward/reverse rotation of the reamer to be pushed upward or discharged downward.

According to still another aspect of the present invention, a reamer for operating an implant includes: a cutting portion including a cutting edge for cutting a bone in order to place an implant in the bone, and a discharge path for discharging bone remnants generated after the cutting of the bone; and a connection portion extending below the cutting portion, wherein the cutting portion further includes a screw portion including a left-hand screw connected with the discharge path to allow the bone remnants to be pushed upward to a maxillary sinus mucous membrane along the screw portion while the reamer for operating the implant rotates counterclockwise.

According to further another aspect of the present invention, a reamer for operating an implant includes: a cutting blade for cutting a bone in order to place the implant in the bone; and a screw portion formed in a left-hand screw such that the cutting blade pushes upward bone remnants generated after the bone is cut or a transplanted bone transplanted in advance to a maxillary sinus mucous membrane while the reamer for operating the implant rotates counterclockwise.

According to yet another aspect of the present invention, a reamer for operating an implant includes: a cutting portion for cutting a bone in order to place the implant in the bone; and a connection portion extending below the cutting portion, wherein the cutting portion includes: a cutting blade protruding an upper one side of the cutting portion including a circumference of a circumferential surface such that the upper one side makes a downward angle in a direction of a rotational axis of the reamer from the circumference, and including a cutting edge including a protruding vertex rising upward in a spiral shape with respect to the rotational axis of the reamer to perform a bone cutting; and a screw portion arranging two or more cutting blades on the rotational axis of the reamer at an equal angle, and extending, on the circumference of the circumferential surface, from the two or more cutting blades to a lower portion of the cutting portion to allow bone remnants or a transplanted bone transplanted in advance to be pushed upward while the reamer for operating the implant rotates counterclockwise.

### BRIEF DESCRIPTION OF THE DRAWINGS

The above and other objects, features and advantages of the present invention will become more apparent from the following detailed description when taken in conjunction with the accompanying drawings in which:
FIG. 1 is a view illustrating an operation process of a side approach maxillary sinus graft according to a related art;
FIG. 2 is a view illustrating an operation process of osteotome sinus graft according to a related art;
FIG. 3 is a perspective view of a reamer according to an embodiment of the present invention;
FIG. 4 is a perspective view of a reamer according to another embodiment of the present invention;
FIG. 5 is a perspective view of a reamer according to still another embodiment of the present invention;
FIG. 6 is a view illustrating a portion of an operation process of sinus graft using a reamer according to the present invention; and
FIG. 7 is a view illustrating a reamer according to the present invention compared with a general drill.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail. Terminologies used herein are defined with consideration of functions in the present invention and may change depending on the intention or practice of a user and an operator. Therefore, the definitions thereof should be made on the basis of overall understanding of the specification.

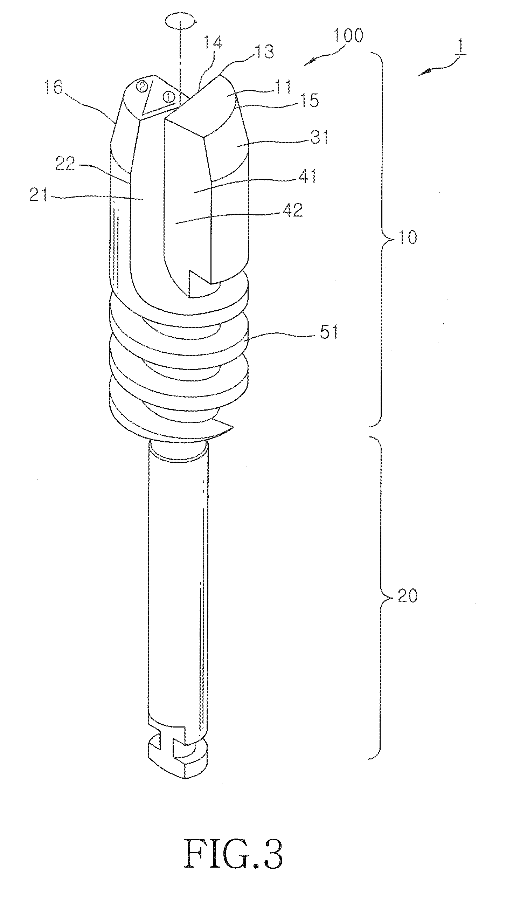

FIG. 3 is a perspective view of a reamer according to an embodiment of the present invention.

Referring to FIG. 3, the reamer 1 includes a cutting portion 10 for forming a hole for placing an implant in a bone, and a connection portion 20 extending below the cutting portion 10 and having a smaller diameter than that of the cutting portion 10.

The cutting portion 10 is formed in a cylindrical shape having a predetermined diameter, and may include a taper 16 on an upper circumference, or may form a straight line-shaped circumferential surface 31 on the upper circumference.

For example, the diameter of the connection portion 20 connected to a rotation driving unit (not shown) is constant on the basis of a general standard. The cutting portion 10 may be formed in various diameters. Particularly, a reamer having the cutting portion 10 whose diameter is lower may be formed in a straight line shape, not a taper shape.

As illustrated, the cutting portion 10 includes a cutting blade 100 of a predetermined shape. The cutting blade 100 has the following construction. The cutting blade 100 protrudes one side including a circumference 13 in an upper direction (length direction of the reamer), and includes an upper cutting surface 11 having a predetermined slope in a direction ① and a direction ②. That is, the upper cutting surface 11 is formed by raising one side in a spiral shape with respect to the rotational axis of the reamer 1. At this point, the one side may be formed to have a downward angle from the circumference to the rotational direction of the reamer 1. That is, the one side has a spiral slope in the direction ① and the direction ②, thereby contributing to forming one protruding vertex, which is a cutting point 13 which will described later.

The cutting blade 100 includes a lower cutting surface 21 having a side 14 (cutting edge) shared by the upper cutting surface 11. The lower cutting surface 21 is parallel to the rotational axis of the reamer 1, and forms a cutting discharge path 16 which will be described later.

Therefore, cutting of a bone is performed by the cutting edge 14, which is the common side shared by the upper cutting surface 11 and the lower cutting surface 21. The cutting edge 14 has a slope in the direction ①, and makes an acute angle with the rotational axis of the reamer 1. Particularly, a vertex 13 (referred to as a 'cutting point' hereinafter) where three surfaces of the upper cutting surface 11, the lower cutting surface 21, and a circumferential surface 31 meet one another is to start cutting initially when cutting of the bone starts.

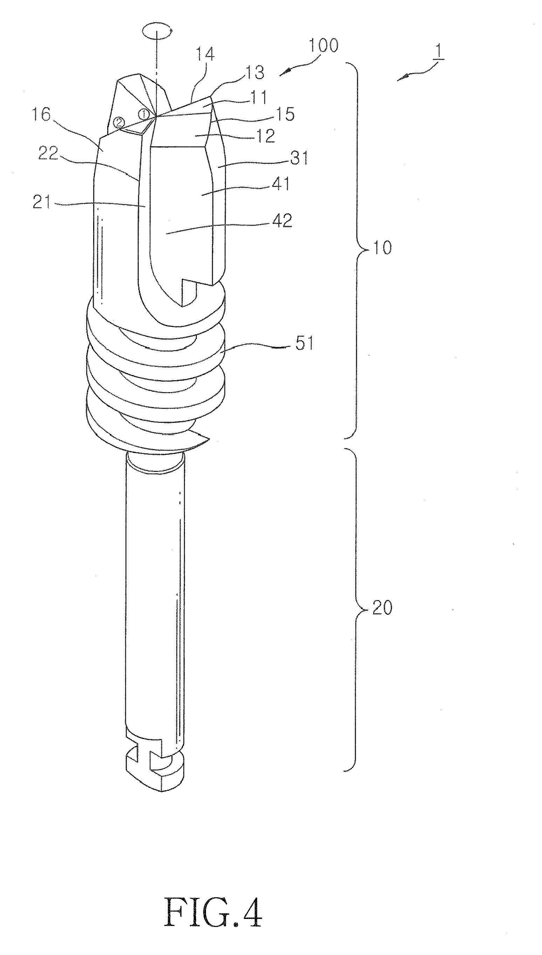

Also, the cutting blade 100 forms a discharge surface 41 meeting the upper cutting surface 11 and the circumferential surface 31. As described below, referring to FIG. 4, the reamer 1 according to the present invention includes one more cutting blade 100 facing the rotational axis of the reamer 1. The cutting blade 100 includes the upper cutting surface 11, the lower cutting surface 21, the circumferential surface 31, and the discharge surface 41.

Therefore, a space formed by the lower cutting surface 21 of one cutting blade and the discharge surface 41 of the other cutting blade may be formed. The space serves as a discharge path 42 and allows bone remnants generated by cutting of the bone to be discharged along the discharge path 42.

Furthermore, a lateral edge 18 which is a common side shared by the lower cutting surface 21 and the circumferential surface 31 may polish the inner surface of the hole formed by the cutting of the bone.

As described above, the reamer 1 of FIG. 3 forms the two cutting blades 100 such that they face each other. Also, the upper cutting surface 11 is formed in a spiral shape counterclockwise (rotational direction denoted by the arrow of FIG. 3), so that cutting of the bone may be performed by the cutting edge 14 including the cutting point 13 when the reamer 1 rotates counterclockwise.

Also, the present invention is not limited thereto, but as embodied in FIG. 4, three or more cutting blades 100 may be arranged at an equal angle with respect to the rotational axis of the reamer 1. Here, when the number of the cutting blades 100 is large, a cutting speed increases for the same rotation ratio.

The reamer 1 of FIG. 4 is formed on the upper cutting surface 11 of the cutting blade 100 as in FIG. 3. Particularly, as illustrated, a difference is that a tapered surface 12 of a predetermined shape connected to the upper cutting surface 11 is formed.

The tapered surface 12 is formed to make a downward angle to the discharge path 42. The tapered surface 12 can share stress that may be concentrated on the neighborhood of the cutting edge 14 during a cutting operation and so extend the life of an instrument. In an embodiment, the cutting surface 11 of FIG. 4 may have a slope equal to or smaller than the slope of the upper cutting surface 11 of the reamer of FIG. 3.

Also, in the cutting blade 100, the lower cutting surface 21 forming the cutting edge 14 is formed to have a predetermined slope so that the lower cutting surface 21 is not parallel to the rotational axis of the reamer 1. Accordingly, the blade of the cutting edge 14 may be made sharper. In this case, cutting force thereof is superior to a reamer 1 having the same number of cutting blades 100.

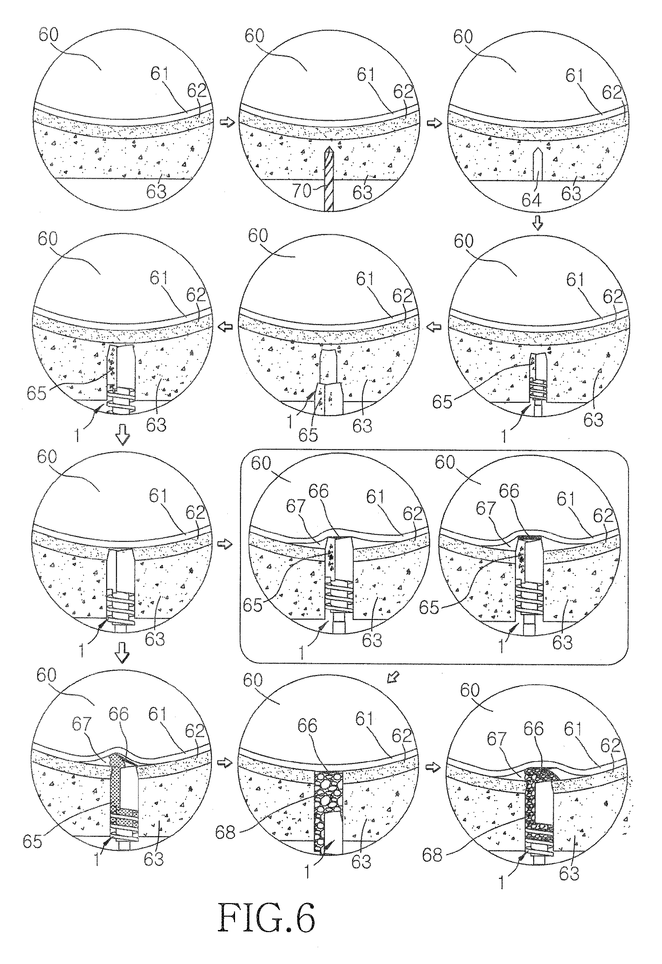

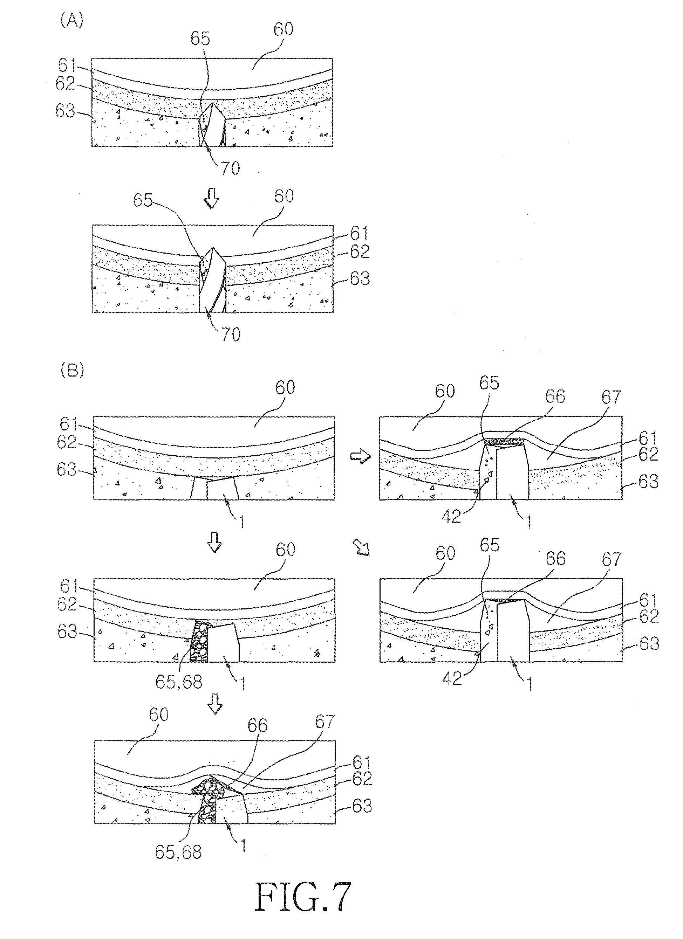

Therefore, the cutting edge does not directly contact a maxillary sinus mucous membrane 61 during a cutting operation of the cutting edge 14 including the cutting point 13 arranged at an equal angle and making an acute angle with respect to the rotational axis of the reamer 1 as illustrated in FIG. 6 or 7. That is, since a bone piece 66 generated by the cutting process and put on the cutting edge 14 contacts the maxillary sinus mucous membrane 61, an operation can be safely performed.

Meanwhile, a screw portion 51 is formed in the lower portion of the cutting portion 10 if necessary. That is, the screw portion 51 formed in the lower circumference of the cutting portion 10 is connected to a discharge path 42 to allow bone remnants generated during the cutting operation while the reamer 1 rotates to be pushed upward through the discharge path 42 along the screw portion 51.

At this point, the screw portion 51 formed in the cutting portion 10 is formed as a left-hand screw to allow bone remnants to be pushed upward to the maxillary sinus mucous membrane 61 through the discharge path 42 along the screw portion 51 when the reamer 1 rotates counterclockwise (rotational direction denoted by the arrow of FIG. 4). When the reamer 1 of FIG. 3 rotates clockwise, bone remnants will be discharged downward to the outside along the screw portion 51.

Therefore, in case of lifting the maxillary sinus mucous membrane 61 using the reamer according to the present invention, the cutting edge 14 of the reamer 1 does not contact the maxillary sinus mucous membrane 61 but bone remnants rising upward through the discharge path 42 along the screw portion 51 contacts the maxillary sinus mucous membrane 61, so that the mucous membrane 61 is not damaged and the operation can be safely performed.

In a preferred embodiment, as described with reference to FIG. 6 or 7, when the reamer 1 of the present invention reaches the neighborhood of a compact bone 62 located below the maxillary sinus mucous membrane 61, a portion ranging from the discharge path 42 up to a part of the screw portion 51 is filled with cut an autogenous bone and an artificial bone. When the cutting operation is performed at this state, a transplanted bone 68 (cut remnants of a remaining compact bone, an already cut autogenous bone, and an artificial bone) is pushed upward by the screw portion 51 simultaneously with the cutting of the remaining compact bone 62 as described above. Therefore, the maxillary sinus mucous membrane 61 can be safely lifted.

Also, after the cutting of the compact bone 62 is performed, when a reamed hole is filled with the transplanted bone 68 and the reamer 1 is rotated and moved forward, the screw portion 51 is filled with the filled bone remnants and the mucous membrane 61 is lifted. The above process may be repeated until the screw portion 51 is filled with sufficient transplanted bones 68 required for placing an implant.

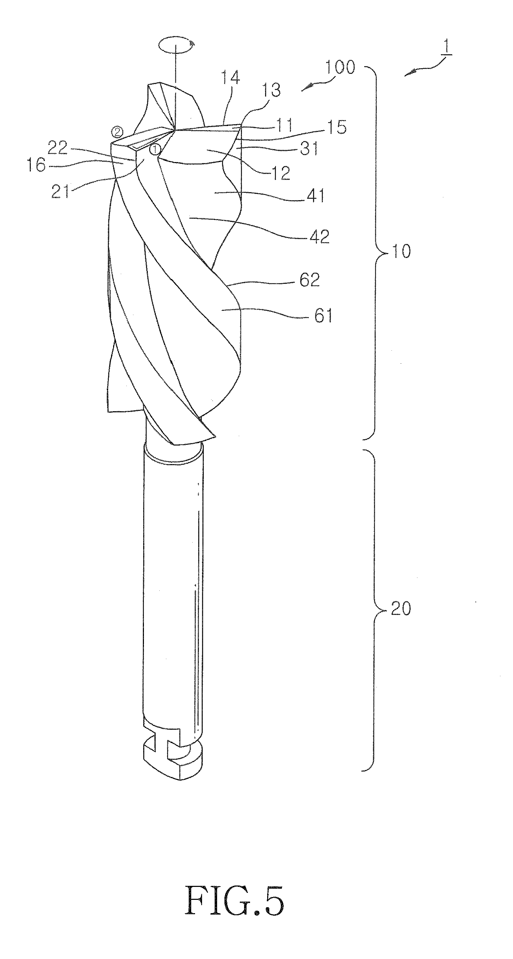

FIG. 5 is a perspective view of a reamer according to still another embodiment of the present invention.

Referring to FIG. 5, a cutting blade 100 of a reamer has the same construction as that of the cutting blade of the reamer shown in FIG. 4. However, it should be noted that the reamer 1 of FIG. 5 includes a predetermined screw portion 61 extending from the cutting blade 100 instead of the screw portion 51 of FIG. 4.

The reamer 1 of FIG. 4 includes the three cutting blades 100 and the three discharge paths 42. Due to the screw portion 51, bone remnants are not pushed upward from all the three discharge paths 42. That is, only one discharge path is connected with the screw portion 51 to allow bone remnants (or transplanted bone) to be pushed upward.

However, the reamer 1 of FIG. 5 includes the screw portion 61 connected to the cutting blade 100 and extending up to a cutting portion 10 of the reamer 1 in the form of a screw.

The screw portion 61 is formed in the same direction (left-hand screw direction) as the screw portion 51. When the screw portion 61 is formed, it may be checked that bone remnants (or transplanted bone) is pushed upward from all three discharge paths 42. Also, an edge 62 of the screw portion 61 will perform a polishing operation which cannot be performed by the screw portion 51.

FIG. 6 is a view illustrating a portion of an operation process of sinus graft using a reamer 1 according to the present invention.

As illustrated in FIG. 6, a distance up to a maxillary sinus 60 is measured on a radiation photo, and a bone 63 is then deleted up to a portion that does not damage a maxillary sinus mucous membrane 61 using a general drill 70 for a general implant operation in order to perform a fast cutting of a compact bone 62, so that a hole 64 is formed.

Next, a reamer 1 having a gradually increasing diameter is inserted into the hole 64 to extend the hole until the diameter of the hole becomes a diameter suitable for placing an implant, and simultaneously, the hole is formed deep.

After that, when the hole having the diameter suitable for placing the implant is completed, the compact bone 62 is deleted using a last reamer 1 and the maxillary sinus mucous membrane 61 is lifted.

When the reamer 1 of the present invention is used, a bone piece 66 having a predetermined shape (for example, upset cone shape) is generated by the cutting operation of the cutting edge 14 as illustrated. The bone piece 66 is put on the cutting edge of the reamer 1. Therefore, the cutting edge 14 including the cutting point 13 does not directly contact the mucous membrane 61 but contacts the bone piece 66, so that the operation may be safely performed. Therefore, unwanted damage of the mucous membrane 61 due to lack of experience may be reduced.

Furthermore, when the reamer 1 of the present invention is used, the bone remnants 65 generated by the cutting operation is moved upward along the discharge path 42 by the screw portion 51 or the screw portion 61 as illustrated. The moving bone remnants 65 push the bone piece 66 upward, and simultaneously, fill a lifted empty space 67 with the bone to lift the mucous membrane 61.

More preferably, a hole generated after the cutting of the last compact bone 62 is performed is filled with a transplanted bone 68 (autogenous bone or artificial bone). Alternatively, the discharge path 42 of the reamer 1 and a portion of the screw portion 51 (or the screw portion 61) are filled with a transplanted bone 68. Alternatively, two regions may be filled with a transplanted bone.

The reamer 1 of the present invention is rotated and moved forward in the hole. The screw portion 51 or the screw portion 61 allows the transplanted bone 68 to lift the mucous membrane 61 and fill the empty space 67. The above process is repeated until the empty space 67 is filled with sufficient transplanted bone 68 suitable for placing an implant.

When a bone is ruptured using a related art osteotome, the bone is not ruptured in a desired size and so the osteotome has not been helpful in fixing an implant.

However, when a bone is deleted using the reamer 1 of the present invention, a hole of a desired diameter may be formed, so that a hole of a size suitable for fixing an implant to be operated may be formed.

Therefore, initial fixing of an implant may be possible even in the case where an amount of a bone is small, and furthermore, an operation may be performed using the reamer 1 of the present invention in the case where an amount of a bone is so small that side approach sinus graft is required.

FIG. 7 is a view illustrating a reamer according to the present invention compared with a general drill.

Referring to FIG. 7, in case of using a related art general drill 70, since the upper end of the drill 70 is sharp and pointed, when this pointed upper end contacts the maxillary sinus mucous membrane 61, vertical force is concentrated on one portion of the mucous membrane 61. Therefore, as illustrated, there is high possibility that the mucous membrane 61 is damaged.

On the other hand, according to the reamer 1 of the present invention, the cutting edge 14 including the cutting point 13 does not directly contact the mucous membrane 61, but the bone piece 66 formed by the cutting of the cutting edge 14 contacts the mucous membrane 61 first.

Furthermore, according to the reamer 1, the screw portion 51 formed below the cutting portion 10, or the screw portion 61 allows the bone remnants 65 generated by a cutting operation or the transplanted bone 68 to be transplanted filled to move upward and lift the mucous membrane 61.

Therefore, an operation may be safely performed without damaging the mucous membrane 61.

As described above, when a reamer for operating an implant according to the present invention is used, a danger of damaging a maxillary sinus mucous membrane may be minimized structurally, so that a very safe implant operation may be performed.

Also, in the case where an implant is operated for a case where an amount of bone up to a maxillary sinus is not insufficient, an operation method of hammering using an osteotome has been inevitably performed in a related art, but since a reamer for operating an implant according to the present invention makes a hole in a bone, fear and pain experienced by patients before and after an operation may be minimized.

Furthermore, since a reamer for operating an implant according to the present invention uses a method of forming a hole, not a method of breaking a cortex bone on the bottom of a maxillary sinus, an exact hole similar to the diameter of an implant to be placed may be formed in the cortex bone, and accordingly, the implant is coupled very accurately and stably in the hole of the cortex bone of the maxillary sinus, so that an environment advantageous to ossification may be provided.

Although the invention has been shown and described with reference to certain preferred embodiments thereof, it will be understood by those skilled in the art that various changes in form and details may be made therein without departing from the spirit and scope of the invention as defined by the appended claims. Therefore, the scope of the present invention should not be limited to the above-described embodiments but should be determined by not only the appended claims but also the equivalents thereof.

## Claims

1. A reamer for operating an implant, the reamer comprising:
a cutting portion for forming a hole for placing the implant in a bone; and
a connection portion having a smaller diameter than that of the cutting portion and extending below the cutting portion,
wherein the cutting portion comprises:
a cutting blade protruding an upper one side of the cutting portion comprising a circumference of a circumferential surface such that the upper one side makes a downward angle in a direction of a rotational axis of the reamer from the circumference, and comprising a cutting edge comprising one protruding vertex rising upward in a spiral shape with respect to the rotational axis of the reamer to perform a bone cutting;
a discharge path serving as an empty space formed by arranging two or more cutting blades on the rotational axis of the reamer at an equal angle, and discharging bone remnants generated after the cutting by the cutting edge; and
a screw portion connected with the discharge path, and
the cutting portion allows the bone remnants generated during forward/reverse rotation of the reamer to be pushed upward along the screw portion or discharged downward by forming the cutting blade, the discharge path, and the screw portion on the circumference of the circumferential surface.

2. The reamer of claim 1, wherein the screw portion comprises a left-hand screw portion to allow the bone remnants to be pushed upward to a maxillary sinus mucous membrane along the left-hand screw portion when the reamer rotates counterclockwise, and allows the bone remnants to be discharged downward along the left-hand screw portion when the reamer rotates clockwise.

3. The reamer of claim 1, wherein the one side further comprises a tapered surface making a downward angle in a direction of the discharge path.

4. The reamer of claim 1, wherein a taper is formed on an upper circumference of the circumferential surface.

5. The reamer of claim 1, wherein the cutting edge makes an acute angle with the rotational axis of the reamer.

6. A reamer for operating an implant, the reamer comprising:
a cutting portion for forming a hole for placing the implant in a bone; and
a connection portion having a smaller diameter than that of the cutting portion and extending below the cutting portion,
wherein the cutting portion comprises:
a cutting blade protruding an upper one side of the cutting portion comprising a circumference of a circumferential surface such that the upper one side makes a downward angle in a direction of a rotational axis of the reamer from the circumference, and comprising a cutting edge comprising one protruding vertex rising upward in a spiral shape with respect to the rotational axis of the reamer to perform a bone cutting; and
a screw portion comprising a discharge path arranging two or more cutting blades on the rotational axis of the reamer at an equal angle, and extending, on the circumference of the circumferential surface, from the two or more cutting blades to a lower portion of the cutting portion to allow bone remnants generated during forward/reverse rotation of the reamer to be pushed upward or discharged downward.

7. The reamer of claim 6, wherein the screw portion comprises a left-hand screw portion to allow the bone remnants to be pushed upward to a maxillary sinus mucous membrane along the discharge path when the reamer rotates counterclockwise, and allows the bone remnants to be discharged downward along the discharge path when the reamer rotates clockwise.

8. The reamer of claim 6, wherein the one side further comprises a tapered surface making a downward angle in a direction of the discharge path.

9. The reamer of claim 6, wherein a taper is formed on an upper circumference of the circumferential surface.

10. The reamer of claim 6, wherein the cutting edge makes an acute angle with the rotational axis of the reamer.

11. A reamer for operating an implant, the reamer comprising:
a cutting portion comprising a cutting edge for cutting a bone in order to place the implant in the bone, and a discharge path for discharging bone remnants generated after the cutting of the bone; and
a connection portion extending below the cutting portion,
wherein the cutting portion further comprises a screw portion comprising a left-hand screw connected with the discharge path to allow the bone remnants to be pushed upward to a maxillary sinus mucous membrane along the screw portion while the reamer for operating the implant rotates counterclockwise.

12. A reamer for operating an implant, the reamer comprising:
a cutting blade for cutting a bone in order to place the implant in the bone; and
a screw portion formed in a left-hand screw such that the cutting blade pushes upward bone remnants generated after the bone is cut or a transplanted bone transplanted in advance to a maxillary sinus mucous membrane while the reamer for operating the implant rotates counterclockwise.

13. A reamer for operating an implant, the reamer comprising:
a cutting portion for cutting a bone in order to place the implant in the bone; and
a connection portion extending below the cutting portion,
wherein the cutting portion comprises:
a cutting blade protruding an upper one side of the cutting portion comprising a circumference of a circumferential surface such that the upper one side makes a downward angle in a direction of a rotational axis of the reamer from the circumference, and comprising a cutting edge comprising a protruding vertex rising upward in a spiral shape with respect to the rotational axis of the reamer to perform a bone cutting; and
a screw portion arranging two or more cutting blades on the rotational axis of the reamer at an equal angle, and extending, on the circumference of the circumferential surface, from the two or more cutting blades to a lower portion of the cutting portion to allow bone remnants or a transplanted bone transplanted in advance to be pushed upward while the reamer for operating the implant rotates counterclockwise.
